# EUROPÄISCHE PATENTSCHRIFT

(11) **EP 2 656 416 B1**
(45) Veröffentlichungstag und Bekanntmachung des Hinweises auf die Patenterteilung: **21.02.2018**
(21) Anmeldenummer: 11815693.4
(22) Anmeldetag: 07.12.2011
(51) Int. Cl.: H01M 2/10, H01M 2/12, B60K 1/04

(54) **VORRICHTUNG ZUR HALTERUNG VON MINDESTENS EINEM BATTERIEELEMENT**
DEVICE FOR HOLDING AT LEAST ONE BATTERY ELEMENT
DISPOSITIF DE FIXATION D'AU MOINS UN ÉLÉMENT DE BATTERIE

(30) Priorität: 23.12.2010 DE 102010056005
(43) Veröffentlichungstag der Anmeldung: 30.10.2013
(73) Patentinhaber: Volkswagen Aktiengesellschaft, 38436 Wolfsburg (DE)
(72) Erfinder: CORDES, Jürgen, 38108 Braunschweig (DE)
(86) Internationale Anmeldenummer: PCT/EP2011/006138
(87) Internationale Veröffentlichungsnummer: WO 2012/084132

(56) Entgegenhaltungen:
- EP-A1- 1 775 784
- DE-A1-102004 005 393
- DE-C1- 19 519 883
- DE-T2- 60 007 199
- JP-A- 2003 068 264

## Beschreibung

Die Erfindung betrifft eine Vorrichtung zur Halterung von mindestens einem Batterieelement sowie ein Straßenfahrzeug für die Beförderung von Personen und/oder Waren oder Arbeitsfahrzeug mit Hybrid- oder Elektroantrieb, das eine derartige Haltevorrichtung aufweist.

Batterien werden zur Speicherung elektrischer Energie u.a. in Fahrzeugen, beispielsweise in mit einem Verbrennungsmotor ausgerüsteten Fahrzeugen oder in zusätzlich oder ausschließlich mit einem Elektromotor angetriebenen Fahrzeugen, verwendet.

Zum Einschließen von Batteriezellen und als Verwendung zum Bilden von Batteriegehäusen in einem Fahrzeug wird in US 2002/0127362 A1 ein flexibles Polymerlaminat angegeben. Das Laminat besteht aus einem Barrierepolymer, das gegen in Batteriezellen typischerweise vorhandene Chemikalien widerstandsfähig ist, und einem abdichtenden Polymer. Das abdichtende Polymer wird beispielsweise auf einen Innenrand eines Bogens aus dem Barrierepolymer aufgebracht, sodass zwei mit dem abdichtenden Polymer versehene Bögen des Barrierepolymers unter Bildung einer zur Aufnahme einer Batteriezelle dienenden Beuteltasche miteinander verklebt werden können. Die Anschlüsse der Batteriezelle werden abgedichtet aus der Beuteltasche herausgeführt.

Für die Batterien werden in den Fahrzeugen, wie Personen- oder Lastkraftfahrzeugen, geeignete Halterungen eingesetzt, die dazu dienen, die Batterien während der Fahrt und insbesondere beim Beschleunigen, bei Verzögerungs- oder bei Querbeschleunigungsvorgängen im Fahrzeug zu fixieren. Hierzu sind in der Vergangenheit beispielsweise Klemmstreifen auf einem Batterieträger verwendet worden. Auf dem Batterieträger wurde eine Batterie, beispielsweise ein Bleiakkumulator, mittels der Klemmstreifen festgehalten. Nicht nur konventionell mit einem Verbrennungsmotor angetriebene Fahrzeuge, die eine Batterie vor allem zur elektrischen Energieversorgung zum Starten des Motors benötigen, sondern auch ausschließlich elektrisch angetriebene Fahrzeuge, beispielsweise Flurförderfahrzeuge, sind mit Batterien ausgerüstet. Zur Versorgung der Antriebsaggregate letzterer Fahrzeuge muss eine sehr viel größere elektrische Speicherkapazität als für konventionell angetriebene Fahrzeuge zur Verfügung gestellt werden, sodass üblicherweise eine Vielzahl von Batterien oder auch ein sehr großer Batterieblock im Fahrzeug unterzubringen ist. Auch in mit Brennstoffzellen angetriebenen Fahrzeugen oder in Hybridfahrzeugen, deren Antrieb also teilweise über ein elektromechanisches Antriebsaggregat und teilweise über einen herkömmlichen Verbrennungsmotor realisiert ist, müssen die für die Versorgung des Antriebsaggregats nötigen Batterien untergebracht werden, wobei auch in diesen Fällen eine größere elektrische Speicherkapazität als bei Fahrzeugen, die ausschließlich mit einem Verbrennungsmotor betrieben werden, vorgehalten werden muss.

Aus DE 10 2007 021 293 A1 geht beispielsweise eine Antriebsbatteriebaugruppe eines Elektro-, Brennstoffzellen- oder Hybridfahrzeugs, das zum Transport von Personen und/oder Waren dient, hervor. Diese Baugruppe weist ein nach außen abschließendes Außengehäuse aus Kunststoff auf. Die Batterien sind in diesem Falle zylindrisch und stehen in dem Gehäuse aufrecht. Zur Lagesicherung sind im Gehäuse innenseitig, sich in die Zwischenräume zwischen benachbarten Batteriezellen erstreckende Positioniervorsprünge angeformt, die an den Batteriezellen angreifen. Das Gehäuse besteht aus einem einseitig offenen, behälterförmigen Grundkörper und einem den Grundkörper schließenden Deckel, die beide aus Kunststoff, beispielsweise aus PP, PA, PPS oder PPA, durch Spritzgießen gefertigt sind.

In DE 202 02 249 U1 ist ein fahrbares Arbeitsgerät, insbesondere ein Flurförderfahrzeug, das einen Elektromotor und eine wieder aufladbare Batterieanordnung aufweist, beschrieben. Die Batterieanordnung umfasst eine Gruppe von mehreren Einzelbatterieelementen, beispielsweise Nickel-Cadmium-Einzelbatterielementen, in Form von zylindrischen oder prismatischen Standardelementen. Diese sind reihenweise angeordnet und in Reihe geschaltet. Die Gruppe von Einzelbatterieelementen ist mittels einer Schrumpffolie zu einer Handhabungseinheit zusammengefasst. Die Schrumpffolie umschließt hierzu die Seitenwände und teilweise auch die Stirnseiten der Einzelbatterieelemente.

Aus der EP 1 775 784 A1 ist ein Batteriestapel aus mehreren Batteriemodulen für ein Fahrzeug bekannt, wobei ein Batteriemodul an einem Abstandshalter montiert ist. Das Batteriemodul wird zusammen mit dem Abstandshalter von einem ersten und einem zweiten Abstandshalterelement getragen. Jedes Batteriemodul ist zusammen mit einem Gasführungselement separat mittels eines folienartigen Abdichtungselements hermetisch nach außen abgedichtet.

Aus der DE 10 2004 005 393 A1 ist ein Batteriekasten aus dünnwandigem Stahlblech bekannt, wobei der Batteriekasten wasserdicht und mit einer EMV-Dichtung ausgebildet ist.

Aus der JP 2003 068264 A sind mehrlagige Komposite bekannt, um eine Gasdichtigkeit zu erreichen.

Aus der DE 600 07 199 T2 ist eine Anordnungsstruktur für eine Batteriekühlleitung bekannt. Dabei ist ein Bodenblech oberhalb eines Paares von Längsträgern montiert. Innenelemente des Längsträgers sind an jeder Seite des Bodenblechs in der Wagenbreitenrichtung montiert. Das Bodenblech und die Längsträger-Innenelemente bilden einen batteriekorrespondierenden Teil. Das Bodenblech hat am batteriekorrespondierenden Teil einen Überstand, der sich bezüglich der Breitenrichtung in der Mitte befindet, sowie eine Vertiefung an beiden Seiten des Überstandes. Eine Batterie ist unterhalb des Überstandes eingebaut. Die Batterie weist ein Batteriegehäuse und einen Kasten auf, in dem das Batteriegehäuse untergebracht ist.

Der vorliegenden Anmeldung liegt demnach die Aufgabe zugrunde, eine Halterung für die Batterien in einem Fahrzeug zu finden, die gewährleistet, dass die Batterien lagestabil im Fahrzeug gehalten werden, und dabei außerdem sicherzustellen, dass von den Batterien ausgehende Gase, Flüssigkeiten oder deren Mischungen, etwa Aerosole, aus dem Fahrzeuginnenbereich ferngehalten werden. Die hierfür erforderlichen Maßnahmen sollen einfach und kostengünstig realisierbar sein. Die Halterung soll ferner ein geringes Gewicht haben, damit das Fahrzeug energetisch günstig betrieben werden kann.

Diese Aufgabe wird durch eine Vorrichtung zur Halterung von Batterieelementen in einem Fahrzeug gemäß Anspruch 1 und ein Straßenfahrzeug für die Beförderung von Personen und/oder Waren oder Arbeitsfahrzeug mit Hybridantrieb oder Elektroantrieb gemäß Anspruch 8 gelöst. Bevorzugte Ausführungsformen der Erfindung sind in den Unteransprüchen angegeben.

In der vorliegenden Beschreibung und in den Patentansprüchen werden sowohl einzelne Batteriezellen (mit jeweils einer Anode und einer Kathode) als auch aus einzelnen Batteriezellen zusammengefasste Batterien als Batterieelemente bezeichnet.

Um insbesondere das Problem der Emission von Schadstoffen aus den Batterieelementen in den Fahrzeuginnenraum zu verhindern und um gleichzeitig zu erreichen, dass die Batterieelemente einfach und kostengünstig im Fahrzeug untergebracht werden können und das Gewicht der Halterung einen energetisch günstigen Betrieb des Fahrzeuges ermöglicht, wird die erfindungsgemäße Vorrichtung geschaffen, die zur Halterung von mindestens einem Batterieelement in einem Fahrzeug dient. Diese Vorrichtung umfasst einen das mindestens eine Batterieelement haltenden Batterieträger und eine Abdeckung für das mindestens eine Batterieelement. Der Batterieträger und die Abdeckung umschließen gemeinsam einen das mindestens eine Batterieelement aufnehmenden Batterieraum. Dabei ist die Abdeckung durch eine Folie gebildet, die den Batterieraum zusammen mit dem Batterieträger gasdicht/luftdicht verkapselt. Dabei ist die Vorrichtung zur Halterung zwischen Längsträgern montiert, die eine hintere Baugruppe und eine vordere Baugruppe des Fahrzeugs verbinden.

Zum einen gewährleistet der Batterieträger, dass die Batterieelemente lagestabil im Fahrzeug fixiert sind. Durch die Verwendung einer Abdeckung über dem Batterieträger, die in Form einer Folie ausgebildet ist, wird insbesondere eine kostengünstige Lösung erreicht, weil deren Herstellung und Montage sehr viel einfacher und mit geringerem Mittelaufwand erreichbar ist als die eines herkömmlichen aus massivem Material, beispielsweise Kunststoff und/oder Metall, bestehenden Deckels. Darüber hinaus kann die Folienabdeckung auch sehr leicht gasdicht mit dem Batterieträger verbunden werden. Dadurch wird eine Emission von Gasen und/oder Flüssigkeiten aus dem Batterieraum verhindert. Die Verwendung einer Folienabdeckung anstelle eines herkömmlichen Deckels, d.h. einer Abdeckung aus massivem (dickem, steifem) Material, führt darüber hinaus zu einer Gewichtsverringerung der Vorrichtung, sodass auch der Betrieb des Fahrzeuges energetisch günstiger wird.

Die erfindungsgemäße Vorrichtung wird vorzugsweise in Fahrzeuge eingebaut, sodass die Batterieelemente in diesen befestigt und gehalten werden können. Von daher sind zumindest auch Fahrzeuge für die Beförderung von Personen und/oder Waren (PKW, Omnibusse, LKW) sowie Arbeitsfahrzeuge, wie Flurförderfahrzeuge, mit Hybrid- oder Elektroantrieb, die mit einer erfindungsgemäßen Haltevorrichtung ausgerüstet sind, erfindungsgemäß. Derartige Fahrzeuge umfassen die typischen Merkmale, wie eine Tragkonstruktion mit Radaufhängungen und Rädern, ein Antriebsaggregat und ein Getriebe zur Übertragung der mechanischen Bewegung des Antriebsaggregats auf die Räder, einen Lenkmechanismus mit Lenkgetriebe sowie Bremseinrichtungen. Batterieelemente sind in den Fahrzeugen für die Bereitstellung elektrischer Hilfsenergie (zum Antreiben eines Startermotors bei Verwendung einer Verbrennungskraftmaschine sowie zum Betrieb diverser anderer Einrichtungen) und/oder zur Lieferung elektrischer Energie für den Betrieb eines Elektromotors vorgesehen. Die Fahrzeuge können grundsätzlich zum Transport von Personen und/oder Waren dienen und beispielsweise mit einer herkömmlichen Verbrennungskraftmaschine als Antriebsaggregat ausgerüstet sein. In bevorzugter Weise verfügen diese Fahrzeuge zusätzlich zu einer derartigen Verbrennungskraftmaschine über einen Elektromotor (Hybridfahrzeug), oder sie sind ausschließlich mit einem Elektromotor (Elektrofahrzeug) ausgestattet. Das Fahrzeug kann darüber hinaus Brennstoffzellen zur Erzeugung elektrischer Energie enthalten.

Die in einem derartigen Fahrzeug eingesetzten Batterien können vorzugsweise mehrere einzelne Batteriezellen oder auch zu einem Block zusammengefasste Batteriezellen sein. In letzterem Falle bilden die Batteriezellen kompakte Batterien. Die Batteriezellen können in einer Parallel- und/oder in einer Reihenschaltung elektrisch miteinander verbunden sein, beispielsweise jeweils mehrere Batteriezellen in einer Reihenschaltung zu einer Batterie und mehrere derart zusammengefasste Batterien in einer Parallelschaltung zu einem Batteriekomplex.

In einem Personenkraftwagen ist die erfindungsgemäße Haltevorrichtung im Bodenbereich untergebracht. Sie ist zwischen den die hintere Baugruppe mit der vorderen Baugruppe verbindenden Längsträgern, die sich typischerweise in den Seitenbereichen des Fahrzeuges befinden, montiert sein und vorzugsweise mit diesen zusammen eine tragende Funktion übernehmen. Erfindungsgemäß ist der Batterieträger der Haltevorrichtung zwischen den Längsträgern angeordnet und mit diesen verbunden. Hierzu kann der Batterieträger an den Längsträgern durch Schweißen, Kleben, Nieten, Schrauben, Verrasten oder auf andere Art und Weise befestigt sein. Oberhalb der Haltevorrichtung befindet sich vorzugsweise ein den Fahrzeuginnenraum nach unten abschließendes Bodenblech. Daher befinden sich die Batterieelemente und die Folienabdeckung in diesem Falle zwischen dem Batterieträger und dem Bodenblech.

Um eine gasdichte Verkapselung des Batterieraumes zu erreichen, kann der Batterieträger mit der Folienabdeckung fest verbunden werden. Insbesondere befinden sich zwischen dem Batterieträger und der Folienabdeckung vorzugsweise keine weiteren Bauteile, d.h. die Folienabdeckung und der Batterieträger berühren einander direkt. Sie sind in diesem Falle daher unmittelbar miteinander verbunden und liegen direkt aneinander an. Insbesondere kann eine flächige Verbindung zwischen der Folienabdeckung und dem Batterieträger gebildet werden.

In einer bevorzugten Ausführungsform der Erfindung ist die Folienabdeckung über mindestens ein Verbindungsmittel, ausgewählt aus der Gruppe, umfassend Clips, Verschraubungen und Klebeverbindungen, und/oder durch Einklemmen zwischen dem Batterieträger und einem anderen Teil des Fahrzeuges mit dem Batterieträger gasdicht verbunden. Die Clips und Verschraubungen können sich beispielsweise an einem Rand des Batterieträgers befinden. Auch die Klebeverbindung kann über den Rand des Batterieträgers hergestellt werden. Eine Verbindung mittels Clips oder Verschraubungen kann beispielsweise mit zusätzlichen Verbindungsleisten, die die Ränder der Folienabdeckung an den jeweiligen Rand des Batterieträgers andrücken, gebildet werden, sodass eine flächige und damit abdichtende Verbindung zwischen der Folienabdeckung und dem Batterieträger erreicht wird. Diese Leisten können darüber hinaus eine Gasabdichtungsfunktion ausüben, beispielsweise durch elastische Dichtmaterialien, die die Folienabdeckung von außen an den Batterieträger flächig andrückern. Eine besonders einfache und wirksame Verbindung der Folienabdeckung und des Batterieträgers wird durch Einklemmen der die Abdeckung bildenden Folie zwischen dem Batterieträger und anderen Karosserieteilen des Fahrzeuges erreicht. Beispielsweise kann der Batterieträger bei dessen Montage im Fahrzeug zwischen den Längsträgern der Karosserie eingeklemmt werden, wobei auch die Folienabdeckung, gegebenenfalls unter zusätzlicher Verwendung der vorgenannten Verbindungsleiste, zwischen dem Batterieträger und den Längsträgern eingeklemmt wird. Diese Art der Verbindung der Folienabdeckung mit dem Batterieträger ist besonders günstig, weil die Montage wegen nur weniger erforderlicher Montageschritte schnell durchführbar und unkompliziert ist. Zur Fixierung des Batterieträgers zwischen den Längsträgern im eingeklemmten Zustand kann dieser zusätzlich mit weiteren Befestigungsmitteln, beispielsweise mit Clips, an den Längsträgern befestigt sein. Damit die Folienabdeckung zwischen dem Batterieträger und der Karosserie bzw. anderen Konstruktionsteilen des Fahrzeuges, beispielsweise den Längsträgern, insbesondere auch abdichtend eingeklemmt werden kann, werden die Formgebung des Batterieträgers bzw. dessen Außenkontur und die der angrenzenden Teile aneinander angepasst, um eine flächige und damit abdichtende Verbindung zu erreichen.

Die genannten Verbindungsmittel und das Einklemmen können einzeln oder kombiniert eingesetzt werden, beispielsweise ein Verkleben der Folienabdeckung am Batterieträger und Einklemmen zwischen Batterieträger und den Längsträgern. Mit den genannten Verbindungsarten ist eine schnelle und wirksame, d.h. leicht und zuverlässig gasdicht, erreichbare Verbindung zwischen dem Batterieträger und der Folienabdeckung möglich.

Die Folienabdeckung kann insbesondere unzerreißbar sein, d.h. auch im Falle eines Unfalles des Fahrzeuges ihre Integrität beibehalten, sodass im Batterieraum gegebenenfalls enthaltene Stoffe, die aus den Batterieelementen stammen, nicht austreten können. Diese Eigenschaft der Folienabdeckung wird insbesondere dadurch erreicht, dass ein Material mit großer Festigkeit für die Folienabdeckung gewählt wird. Derartige Materialien sind insbesondere Kunststoffmaterialien, beispielsweise aus Polyester, etwa Polyethylenterephthalat, oder aus Polypropylen, und ganz besonders Materialien, die Verbundwerkstoffe sind, d.h. zusätzlich Verstärkungsmaterialien enthalten, wie Glas- oder Carbonfasern oder -vlies.

Die Folienabdeckung ist in Form einer Folie ausgebildet, d.h. sie ist wie eine Folie leicht biegbar und sehr dünn, sodass sie sich an ein vorgegebenes Oberflächenprofil anpassen kann. Die Dicke kann beispielsweise maximal 500 µm, weiter bevorzugt maximal 300 µm, noch weiter bevorzugt maximal 250 µm, noch weiter bevorzugt maximal 150 µm und am meisten bevorzugt maximal 100 µm betragen. Die Dicke der Folie kann ferner beispielsweise mindestens 5 µm, weiter bevorzugt mindestens 10 µm, noch weiter bevorzugt mindestens 15 µm und am meisten bevorzugt mindestens 20 µm betragen.

In einer besonders bevorzugten Ausführungsform der Erfindung ist die Folienabdeckung innenseitig elektrisch isolierend ausgebildet. Damit wird erreicht, dass die Folienabdeckung auch bei einer Berührung mit Strom führenden Teilen der Batterien im Batterieraum keine Fehlfunktion, insbesondere keinen Kurzschluss, verursacht. Die Folie kann hierzu zumindest innenseitig aus Kunststoff bestehen. Der Kunststoff kann beispielsweise Polyester, etwa Polyethylenterephthalat, oder Polypropylen sein. In einer bevorzugten Ausführungsform der Erfindung ist die Folienabdeckung zumindest überwiegend durch eine Kunststofffolie gebildet.

In einer weiteren bevorzugten Ausführungsform der Erfindung schirmt die Folienabdeckung elektromagnetische Strahlung ab. Insbesondere ist die Folienabdeckung derart ausgebildet, dass sie von den Batterien emittierte elektromagnetische Strahlung abschirmt, um zu verhindern, dass durch den elektrischen Strom in den Batterien erzeugte elektromagnetische Strahlung zu einer Beeinträchtigung des Bordnetzes führt.

In einer weiteren bevorzugten Ausführungsform der Erfindung ist die Folienabdeckung durch eine in deren Volumen und/oder außenseitig elektrisch leitfähige Folie gebildet. Durch diese Maßnahmen kann die zuvor erwähnte Verringerung der Emission elektromagnetischer Strahlung erzielt werden.

Ganz besonders bevorzugt kann die die Folienabdeckung bildende Folie eine außenseitig auf der Folie befindliche Sperrschicht und/oder eine oder mehrere sandwichartig in der Folie befindliche elektrisch leitfähige Sperrschichten aufweisen, und/oder sie kann elektrisch leitfähige Partikel enthalten. Beispielsweise kann die Folienabdeckung außenseitig eine Metallschicht aufweisen, beispielsweise eine Aluminium-, Kupfer- oder Silberschicht. Diese Schicht kann mit einem physikalischen oder chemischen Verfahren auf die Folie, beispielsweise eine Kunststofffolie, aufgebracht werden, beispielsweise durch Aufdampfen. Diese Schicht kann alternativ durch Laminieren einer Metallfolie mit einer Kunststofffolie hergestellt werden. Alternativ oder zusätzlich kann die Folienabdeckung auch eine oder mehrere als Zwischenlagen eingesetzte Metallschichten zusammen mit einer oder mehreren Kunststofffolien (im Sandwich) enthalten. Auch diese Metallschicht(en) kann/können beispielsweise aus Aluminium, Kupfer oder Silber bestehen. Eine derartige Folienabdeckung kann beispielsweise durch Laminieren von zwei äußeren Kunststofffolien mit einer dazwischen angeordneten Metallfolie gebildet werden. Alternativ oder zusätzlich kann das Material der Folienabdeckung auch selbst elektrisch leitfähig sein, beispielsweise durch Einlagerung von elektrisch leitfähigen Partikeln, beispielsweise von Metallpartikeln oder elektrisch leitfähigen Polymeren, in die ansonsten elektrisch nicht leitfähige Matrix der Folie. Beispielsweise können die Metallpartikel wiederum aus Aluminium, Kupfer oder Silber bestehen. Alternativ kann die Folie eine Metallfolie sein, die innenseitig durch Beschichten mit Kunststoff elektrisch isolierend ist.

Somit kann die Folienabdeckung aus einer Folie gebildet sein, die eine Schichtung mehrerer Folien enthält, nämlich aus mindestens einer elektrisch isolierenden Folie oder Schicht, beispielsweise einer Kunststofffolie, und mindestens einer elektrisch leitfähigen Folie oder Beschichtung, beispielsweise einer Metallfolie, die sich auf der Außenseite der Folienabdeckung befindet. Oder die Folienabdeckung kann aus zwei elektrisch isolierenden Folien, beispielsweise Kunststofffolien, und einer dazwischen angeordneten elektrisch leitfähigen Folie oder Schicht, beispielsweise einer Metallfolie, bestehen. Kombinationen dieser Varianten sind selbstverständlich ebenfalls möglich. Die jeweiligen Dicken der leitfähigen und nicht leitfähigen Folienschichten sind an die Anforderungen angepasst, die an die Folie gestellt werden, wie isolierende Eigenschaft gegenüber dem Batterieinnenraum, elektromagnetische Abschirmwirkung, mechanische Stabilität (beispielsweise Zugfestigkeit) der Folie und gegebenenfalls elastische oder inelastische Verformbarkeit.

Die Folienabdeckung hat im Wesentlichen eine Form, die es erlaubt, dass die Abdeckung möglichst das die Batterieelemente auf dem Batterieträger erzeugende Relief nachbildet und somit wenig Raum einnimmt. Daher kann die Folie bevorzugt dreidimensional geformt sein, um ein Umgreifen der Folienränder zumindest auf die Seitenränder des Batterieträgers oder auf die Unterseiten von dessen Rändern zur flächigen Anlage zu ermöglichen. Hierzu kann die Folie beispielsweise durch Tiefziehen (Thermoformen) und gegebenenfalls Beschneiden (oder Stanzen) in die gewünschte Form gebracht werden.

In einer weiteren bevorzugten Ausführungsform der Erfindung ist der Batterieraum über ein Überdruckventil mit der Umgebung des Batterieraumes verbunden, d.h. nur dann, wenn sich ein vorgegebener Überdruck im Batterieraum entwickelt, werden die darin angesammelten gasförmigen oder flüssigen Stoffe aus dem Raum abgelassen. Beispielsweise kann eine Entwicklung von Gasen mit dem Ergebnis eines Überdruckes im Batterieraum durch einen Unfall oder durch Fehlfunktionen der Batterieelemente verursacht sein. Insbesondere kann der Batterieraum mit der Umgebung außerhalb eines Innenraumes des Fahrzeuges verbunden sein. Dadurch kann gewährleistet werden, dass eventuell gasförmige oder flüssige Produkte, die von den Batterieelementen ausgehen, aus dem Batterieraum abgeleitet (abgeblasen) werden, damit sich kein Überdruck in diesem Raum entwickelt und die Vorrichtung, etwa durch Bersten der Folienabdeckung, beschädigt oder sogar zerstört wird. Außerdem wird dadurch auch sicher gestellt, dass diese Produkte nicht in den Innenraum des Fahrzeuges abgeleitet werden, um die sich darin aufhaltenden Personen nicht zu gefährden oder um darin aufbewahrte Waren nicht zu beschädigen oder zu zerstören. Beispielsweise kann sich an die Folienabdeckung oder an den Batterieträger ein Rohr oder ein Schlauch anschließen, der über das Überdruckventil mit der Umgebung, insbesondere derjenigen außerhalb des Innenraumes des Fahrzeuges, in Verbindung steht.

Der Batterieträger ist vorzugsweise eine einseitig offene Schale mit geeigneten Befestigungselementen für die Batterieelemente. Die Batterieelemente sind in die Schale eingesetzt und dort insbesondere lösbar befestigt. Die Befestigung kann reibschlüssig, beispielsweise durch Einstecken oder Einklemmen, formschlüssig, beispielsweise durch Verrasten oder Verschrauben, oder stoffschlüssig, beispielsweise durch Verkleben, realisiert werden. Der Batterieträger kann beispielsweise aus Stahl, insbesondere hochfestem Warmbandstahl, hergestellt sein. Außerdem befinden sich auf/in dem Batterieträger elektrische Anschlusselemente für die Batterielemente.

Zur näheren Veranschaulichung der Erfindung dienen nachfolgend beschriebene Figuren, die ein Ausführungsbeispiel zeigen:
- Fig. 1: zeigt eine Draufsicht auf die Bodengruppe eines Fahrzeuges mit der erfindungsgemäßen Vorrichtung zur Halterung von Batterieelementen;
- Fig. 2: zeigt eine perspektivische Darstellung eines Batterieträgers mit darin befestigten Batterieelementen;
- Fig. 3: zeigt eine erfindungsgemäße Vorrichtung mit einem Batterieträger und einer Folienabdeckung im Schnitt A-A von Fig. 2;
- Fig. 4: zeigt einen Schnitt durch eine Folienabdeckung.

In der nachfolgenden Beschreibung bezeichnen gleiche Bezugszeichen Elemente mit derselben Funktion.

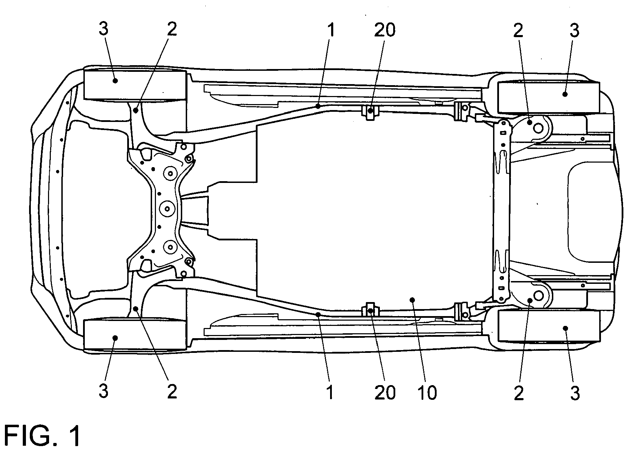

Die in Fig. 1 gezeigte Bodengruppe des Fahrzeuges umfasst unter anderem zwei Längsträger 1, Querlenker 2 für die Räder 3. Zwischen den Längsträgern 1 ist ein Batterieträger 10 der erfindungsgemäßen Haltevorrichtung befestigt. Der Batterieträger 10 ist aus hochfestem Warmbandstahl hergestellt und zwischen den Längsträgern 1 eingeklemmt. Zur Halterung sind ferner Verrastungen 20 vorgesehen, die eine zusätzliche Befestigung des Batterieträgers 10 mit den Längsträgern 1 ermöglichen. Oberhalb des Batterieträgers 10 befindet sich das Bodenblech der Karosserie des Fahrzeuges (nicht dargestellt), das den Fahrzeuginnenraum nach unten abschließt.

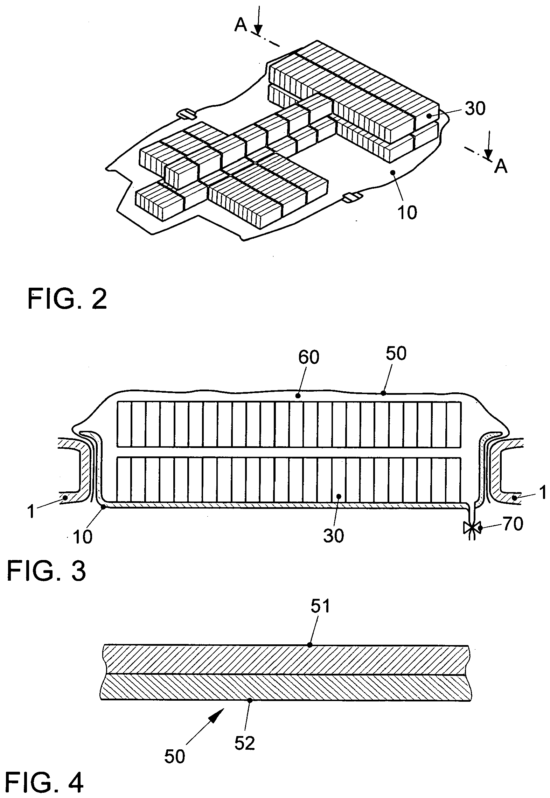

In Fig. 2 ist der Batterieträger 10 mit darin eingesetzten Batterieelementen 30 gezeigt. Der Batterieträger 10 ist einseitig nach oben offen und schalenförmig ausgebildet. Die Batterieelemente 30 sind in den Batterieträger 10 eingesetzt und auf dessen Boden befestigt, beispielsweise durch Einstecken (nicht dargestellt). Hierzu können geeignete Zapfen an der Unterseite der Batterieelemente 30 vorgesehen sein, die in entsprechende Ausnehmungen im Boden des Batterieträgers 10 eingesteckt sind. Zusätzlich sind elektrische Kontaktanschlüsse an den Batterieelementen 30 sowie komplementäre Anschlüsse am Batterieträger 10 vorgesehen, über die die elektrische Energie an die Verbraucher im Fahrzeug bereitgestellt wird (ebenfalls nicht dargestellt). Die Batterieelemente 30 sind in dem Batterieträger 10 gemäß den räumlichen Anforderungen für die Montage unter dem Bodenblech des Fahrzeuges verteilt. Aus diesem Grunde sind insbesondere keine Batterieelemente 30 in einem mittleren Bereich seitlich der Längsmittelachse vorgesehen, wo sich der Fußraum für Fahrgäste des Fahrzeuges befindet.

Die Vorrichtung mit dem Batterieträger 10 und der Folienabdeckung 50 ist in Fig. 3 in einer Schnittdarstellung gemäß Schnitt A-A von Fig. 2 gezeigt. Der Batterieträger 10 ist schalenförmig nach oben einseitig offen. Die Batterieelemente 30 sind auf dem Boden des Batterieträgers 10 befestigt (nicht dargestellt). Die Batterieelemente 30 sind prismatisch geformt und dicht nebeneinander auf dem Batterieträger 10 gestapelt. Im vorliegenden Falle sind 20 Batterieelemente 30 nebeneinander und weitere 20 Batterieelemente 30 darüber angeordnet, wobei die Befestigung der oberen Batterieelemente 30 nicht dargestellt ist. Diese können auf den Batterieelementen der unteren Reihe oder über geeignete Befestigungsmittel direkt auf dem Batterieträger befestigt sein. Die Batterieelemente 30 können zur weiteren Fixierung auch mittels eines Bandes, beispielsweise mittels eines gespannten Stahlstreifens, fest miteinander verbunden sein (nicht dargestellt). Hierzu kann dieses Band beispielsweise etwa mittig und horizontal liegend um die Batterieelemente 30 herumgelegt und verspannt sein.

Der Batterieträger 10 ist zwischen den Längsträgern 1 des Fahrzeuges eingeklemmt. Hierzu liegen die Längsträger 1 an einander gegenüber liegenden Seitenwänden des Batterieträgers 10 flächig an. Indem der auskragende obere Rand des Batterieträgers 10 auf den Längsträgern 1 aufliegt, wird eine besonders innige Verbindung des Batterieträgers 10 mit den Längsträgern 1 erreicht. Zur zusätzlichen Befestigung des Batterieträgers 10 an den Längsträgern 1 sind weitere Befestigungsmittel vorgesehen, die hier aber nicht dargestellt sind.

Die Folienabdeckung 50 ist eine flexible Folie, die den Batterieträger 10 an der oben offenen Seite abschließt. Dadurch wird ein Innenraum gebildet, der der Batterieraum 60 ist und in dem sich die Batterieelemente 30 befinden. Damit der Batterieraum 60 gegen die Umgebung gasdicht/luftdicht abgekapselt ist, wird die Folienabdeckung 50 bei der Montage des Batterieträgers 10 im Fahrzeug, nämlich beim Verklemmen des Batterieträgers 10 zwischen den beiden Längsträgern 1 mit eingeklemmt, indem die Folienabdeckung zwischen den Seitenwänden des Batterieträgers 10 und den Längsträgern 1 verlegt wird. Durch die flächige Anlage der Seitenwände des Batterieträgers 10 an den Längsträgern 1 wird auch die Folienabdeckung 50 flächig an die Seitenwände des Batterieträgers 10 angedrückt, sodass eine gasdichte/luftdichte Verbindung beider erreicht wird. Zusätzlich kann die Folienabdeckung 50 auch mit den Seitenwänden des Batterieträgers 10 verklebt sein, insbesondere um eine Fixierung der Folienabdeckung 50 vor der Montage des Batterieträgers 10 zwischen den Längsträgern 1 zu erreichen. Eine gasdichte/luftdichte Verbindung der Folie 50 mit dem Batterieträger 10 an der Vorder- und an der Hinterseite des Batterieträgers 10 kann beispielsweise ausschließlich durch eine Verklebung erreicht werden.

Um sich im Batterieraum 60 befindliche Gase im Falle eines einen vorgegebenen Druckwert überschreitenden Überdruckes ableiten zu können, ist zusätzlich ein Überdruckventil 70 vorgesehen, das sich an den unteren Bereich des Batterieträgers 10 anschließt. Das Überdruckventil 70 leitet die austretenden Stoffe in die Umgebung ab. Hierzu steht das Überdruckventil 70 vorzugsweise mit dem Umgebungsraum außerhalb des Innenraumes des Fahrzeuges in Verbindung.

Eine Folienabdeckung 50 ist in Fig. 4 im Schnitt gezeigt. Diese Folie 50 besteht außenseitig aus einer Metallfolie 51 und innenseitig aus einer Kunststofffolie 52. Die Metallfolie 51 kann eine Aluminiumfolie sein, und die Kunststofffolie 52 kann eine Polyesterfolie sein. Die Figur ist nicht maßstäblich gezeichnet: Die beiden Folien 51, 52 können gleich oder unterschiedlich dick sein. Insbesondere kann die Metallfolie 51 dünner als die Kunststofffolie 52 sein. Beispielsweise kann die Metallfolie 10 µm dick sein, und die Kunststofffolie 52 kann eine Dicke von 70 µm haben. Die beiden Folien 51, 52 können aber auch gleich dick sein und jeweils eine Dicke von 20 - 50 µm haben. Die beiden Folien 51, 52 sind durch Laminieren fest miteinander verbunden.

## Patentansprüche

1. Vorrichtung zur Halterung von mindestens einem Batterieelement (30) in einem eine hintere Baugruppe und eine vordere Baugruppe aufweisenden Fahrzeug, umfassend einen das mindestens eine Batterieelement (30) haltenden Batterieträger (10) und eine Abdeckung für das mindestens eine Batterieelement (30), die gemeinsam einen das mindestens eine Batterieelement (30) aufnehmenden Batterieraum (60) umschließen, **dadurch gekennzeichnet, dass** die Abdeckung durch eine Folie (50) gebildet ist, die zusammen mit dem Batterieträger (10) eine zweiteilige gasdichte Verkapselung für den Batterieraum (60) bilden und wobei die Vorrichtung zur Halterung zwischen Längsträgern (1) montiert ist, die die hintere Baugruppe und die vordere Baugruppe des Fahrzeuges verbinden.

2. Vorrichtung nach Anspruch 1, **dadurch gekennzeichnet, dass** die Folie (50) über mindestens ein Verbindungsmittel, ausgewählt aus der Gruppe, umfassend Clips, Verschraubungen und Klebeverbindungen, und/oder durch Einklemmen zwischen dem Batterieträger (10) und einem anderen Teil (1) des Fahrzeuges mit dem Batterieträger (10) gasdicht verbunden ist.

3. Vorrichtung nach einem der vorstehenden Ansprüche, **dadurch gekennzeichnet, dass** die Folie (60) innenseitig elektrisch isolierend (52) ist.

4. Vorrichtung nach einem der vorstehenden Ansprüche, **dadurch gekennzeichnet, dass** die Folie (50) elektromagnetische Strahlung abschirmt.

5. Vorrichtung nach einem der vorstehenden Ansprüche, **dadurch gekennzeichnet, dass** die Folie (50) eine außenseitig auf der Folie (50) befindliche Sperrschicht (51) und/oder eine oder mehrere sandwichartig in der Folie befindliche elektrisch leitfähige Sperrschichten aufweist und/oder elektrisch leitfähige Partikel enthält.

6. Vorrichtung nach einem der vorstehenden Ansprüche, **dadurch gekennzeichnet, dass** der Batterieraum (60) über ein Überdruckventil (70) mit der Umgebung verbunden ist.

7. Vorrichtung nach Anspruch 6, **dadurch gekennzeichnet, dass** der Batterieraum (60) mit der Umgebung außerhalb eines Innenraumes des Fahrzeuges verbunden ist.

8. Straßenfahrzeug für die Beförderung von Personen und/oder Waren oder Arbeitsfahrzeug mit Hybrid- oder Elektroantrieb mit einer Vorrichtung zur Halterung von mindestens einem Batterieelement (30) nach einem der Ansprüche 1 - 7.

## Claims

1. Device for holding at least one battery element (30) in a vehicle comprising a rear assembly and a front assembly, comprising a battery support (10) holding the at least one battery element (30) and a cover for the at least one battery element (30), which together enclose a battery compartment (60) receiving the at least one battery element (30), **characterized in that**
the cover is formed by a film (50), which together with the battery support (10) form a two-part gastight encapsulation for the battery compartment (60) and the holding device is mounted between frame side members (1) that connect the rear assembly and the front assembly of the vehicle.

2. Device according to Claim 1, **characterized in that** the film (50) is connected to the battery support (10) in a gastight manner by way of at least one connecting means, selected from the group comprising clips, screw connections and adhesive bonds, and/or by clamping in between the battery support (10) and another part (1) of the vehicle.

3. Device according to either of the preceding claims, **characterized in that** the film (60) is electrically insulating (52) on the inner side.

4. Device according to one of the preceding claims, **characterized in that** the film (50) shields against electromagnetic radiation.

5. Device according to one of the preceding claims, **characterized in that** the film (50) has a barrier layer (51), located on the outer side of the film (50), and/or one or more electrically conductive barrier layers located in a sandwich-like manner in the film and/or contains electrically conductive particles.

6. Device according to one of the preceding claims, **characterized in that** the battery compartment (60) is connected to the surroundings by way of a pressure relief valve (70).

7. Device according to Claim 6, **characterized in that** the battery compartment (60) is connected to the surroundings outside an interior space of the vehicle.

8. Road vehicle for transporting people and/or goods or work vehicle having a hybrid or electric drive with a device for holding at least one battery element (30) according to one of Claims 1-7.

## Revendications

1. Dispositif de fixation d'au moins un élément de batterie (30) dans un véhicule présentant un groupe d'assemblage arrière et un groupe d'assemblage avant, comprenant un support de batterie (10) maintenant ledit au moins un élément de batterie (30) et un recouvrement pour ledit au moins un élément de batterie (30), qui entourent ensemble une chambre de batterie (60) contenant ledit au moins un élément de batterie (30), **caractérisé en ce que**
le recouvrement est formé par une feuille (50), qui forme avec le support de batterie (10) une enceinte étanche au gaz en deux parties pour la chambre de batterie (60) et dans lequel le dispositif de fixation est monté entre des longerons (1), qui relient le groupe d'assemblage arrière et le groupe d'assemblage avant du véhicule.

2. Dispositif selon la revendication 1, **caractérisé en ce que** la feuille (50) est attachée de façon étanche au gaz au support de batterie (10) au moyen d'au moins un moyen de liaison, choisi dans le groupe comprenant des pinces, des vis et des assemblages collés, et/ou par serrage entre le support de batterie (10) et une autre partie (1) du véhicule.

3. Dispositif selon l'une quelconque des revendications précédentes, **caractérisé en ce que** la feuille (60) est électriquement isolante sur son côté intérieur (52).

4. Dispositif selon l'une quelconque des revendications précédentes, **caractérisé en ce que** la feuille (50) forme un écran contre un rayonnement électromagnétique.

5. Dispositif selon l'une quelconque des revendications précédentes, **caractérisé en ce que** la feuille (50) présente une couche d'arrêt (51) se trouvant du côté extérieur sur la feuille (50) et/ou une ou plusieurs couche(s) d'arrêt électriquement conductrices se trouvant sous forme stratifiée dans la feuille et/ou contient des particules électriquement conductrices.

6. Dispositif selon l'une quelconque des revendications précédentes, **caractérisé en ce que** la chambre de batterie (60) est reliée à l'atmosphère par une soupape de sûreté (70).

7. Dispositif selon la revendication 6, **caractérisé en ce que** la chambre de batterie (60) est reliée à l'atmosphère à l'extérieur d'un habitacle du véhicule.

8. Véhicule routier pour le transport de personnes et/ou de marchandises ou véhicule de travail à entraînement hybride ou électrique avec un dispositif de fixation d'au moins un élément de batterie (30) selon l'une quelconque des revendications 1 à 7.
